# EUROPEAN PATENT APPLICATION

(11) **EP 1 211 291 A1**
(43) Date of publication of application: **05.06.2002**
(21) Application number: 00204161.4
(22) Date of filing: 23.11.2000
(51) Int. Cl.: C08L 95/00

(54) **SBS/PPE bitumen composition**

(71) Applicant: ATOFINA Research, 7181 Seneffe (Feluy) (BE)
(72) Inventor: Andriolo, Patrice, 7181 Seneffe (Feluy) (BE)

(57) **Abstract**

The present invention concerns a bituminous composition comprising from 80 to 98 wt% of bitumen based on the weight of the bituminous composition, from 2 to 20 wt% of thermoplastic elastomer and from 0.2 to 10 wt% of polyphenylene ether (PPE) with a thermoplastic elastomer to PPE ratio ranging from 36:1 to 1:1, its preparation and the use thereof to prepare membranes having a good balance of mechanical properties.

## Description

The present invention concerns a process for preparing a novel stabilised bituminous composition. The bituminous composition is useful as membranes that are stable and have balanced mechanical properties over a broad range of temperatures.

It has been known for some time to add thermoplastic elastomers to bitumen to form bitumen compositions that are useful in road applications or waterproof membranes. Thermoplastic elastomers provide the advantage of improving the mechanical and the handling properties of the plain bitumen as for example the high temperature resistance, the elastic recovery and the flexibility at low temperature.

Prior art documents U.S. 5,280,064 and 5,494,966 disclose a reactive process of in-situ producing a copolymer highly miscible with bitumen from incompatible plastics and compatibilised rubber component. There are many types of polymers described in prior art as modifiers for bituminous applications, but two types of polymers remain the most useful as modifiers in the asphalt industry: polyolefins (polyethylene, polypropylene, ...) and its copolymers and thermoplastic elastomer type styrene-butadiene block copolymers. They must however be stabilised or compatibilised in bitumen.

Prior art document WO 97/30121 discloses that homopolymers or copolymers of styrene and styrene derivatives, normally incompatible with bitumen and tending to separate therefrom, can be stably dispersed in bitumen by employing a triblock copolymer which is readily dispersed or dissolved in the bitumen and which comprises a thermoplastic elastomer containing styrene that is compatible with bitumen.

To improve the mechanical properties of bitumen compositions, various solutions, well known in the art, were used in order to increase the range of service temperatures. Some of these solutions were for example to increase the polymer content, or to select specific polymers, or to add fillers, or to blend different bitumen of various origins. All these methods however generally suffer from a major drawback: they result in an important viscosity increase, thereby reducing the processability of the composition.

There is thus a need to prepare a composition that combines a broad range of service temperature and good processability.

It is an aim of the present invention to prepare a bituminous composition that has a high temperature resistance.

It is another aim of the present invention to prepare a bituminous composition that exhibits a good flexibility at low temperature.

It is a further aim of the present invention to prepare a bituminous composition with a low viscosity and therefore a good processability.

The present invention provides a process for preparing a bituminous composition comprising the steps of:
a) providing a bitumen content representing from 80 to 98 wt% based on the weight of the bituminous composition;
b) adding from 2 to 20 wt% of thermoplastic elastomer;
c) adding either simultaneously, or after, or before the thermoplastic elastomer of step b) from 0.2 to 10 wt% of polyphenylene ether (PPE) with a thermoplastic elastomer to PPE ratio ranging from 36:1 to 1:1.

The present invention further provides a bituminous composition comprising from 80 to 98 wt% of bitumen, based on the weight of the bituminous composition, from 2 to 20 wt% of thermoplastic elastomer and from 0.2 to 10 wt% of polyphenylene ether (PPE) with a thermoplastic elastomer to PPE ratio ranging from 36:1 to 1:1.

The mixing is carried out according to known methods in the art. The bitumen is heated up to a temperature of from 160 to 220 °C, preferably, from 180 to 200 °C. The thermoplastic elastomer/PPE blend can be added into the bitumen and mixed with a high shear mixer until complete dispersion is obtained. Alternatively, the thermoplastic elastomer and the PPE can be added separately, in any order.

Preferably, the thermoplastic elastomer and PPE are added simultaneously as a blend having an thermoplastic elastomer/PPE ratio of from 36:1 to 1:1, preferably from 24:1 to 4:1 and most preferably around 12:1.

The thermoplastic elastomer and the PPE can be provided either in powder form, or in crumbs, or in pellets, or can be combined as a master batch.

The term "bitumen" used herein means a class of black or dark-coloured (solid, semi-solid or viscous) cementitious substances, natural or manufactured, composed principally of high molecular weight hydrocarbons of which asphalts, tar, pitches and asphaltites are typical. The term "asphalt" used herein means a dark, brown to black, cementitious material, solid or semi-solid in consistency, in which the predominant constituents are bitumens that occur in nature, as such, or are obtained as residue in petroleum refining.

The thermoplastic elastomer is not especially limited provided that it has the qualities required for surfacing compositions. Such thermoplastic elastomers are well known in the art and are for instance styrene-butadiene block copolymers. In a preferred embodiment, the thermoplastic elastomer can be styrene butadiene styrene (SBS), hydrogenated or partially hydrogenated SBS, styrene isoprene styrene (SIS) and/or styrene ethylene butadiene styrene (SEBS). The tri-block styrene-butadiene copolymer is a thermoplastic elastomer in which the butadiene rubber segments are compatible with or soluble in or are able to be compatibilised with or solubilised in bitumen. They may comprise from 20 to 80 % of styrene, preferably from 20 to 45 % and most preferably about 30 %. Thermoplastic elastomers that may be used in the composition of the present invention may have a molecular weight of from 75,000 to 450,000, preferably from 100,000 to 375,000.

Polyphenylene ether resins are a class of coùmpounds also referred to as polyphenylene oxide resins. They encompass homopolymers, copolymers and graft coplymers obtained by oxidative coupling of phenolic compounds. The preferred PPE used in the compositions are derived from 2,6-dimethyl phenol. Copolymers derived from 2,3,6-trimethyl phenol can also be used. Useful PPE include poly(2,6-dimethyl-1,4-phenylene ether) resin having an intrinsic viscosity between 0.1 and 0.6 dl/g and preferably of 0.25 to 0.35 dl/g, as measured in toluene at 25 °C and a concentration of 0.6 g per 100 ml.

The usual additives can be employed such as for examples oil, tackifying resins, charges or polymers.

The thermoplastic elastomers may be used in any desired amount in the bitumen, consistent with the properties desired to be imparted to the final product. Generally the quantity of thermoplastic elastomer dispersed in the bitumen ranges from 2 to 20 weight %, based upon the total weight of bitumen composition. It is mixed with from 80 to 98 weight % of bitumen. The amount of PPE added to the mixture is of from 0.2 to 10 wt.%, more preferably of from 0.5 to 5 wt.% with the thermoplastic elastomer to PPE ratio required to obtain the desired properties.

The surfacing composition of the present invention has improved mechanical property balance and is preferably used for producing membranes preferably waterproof membranes such as for example bridge membranes, roofing membranes or self-adhesive membranes.

The bituminous compositions of the present invention exhibit an excellent temperature resistance as measured with the ring and ball test as well as cold temperature bending and low foot-print sensitivity. It is further observed that at equivalent ring and ball temperature they exhibit a lower viscosity than prior art compositions leading to an improved processability, better application performances and higher production capacity.

The present invention will now be described with reference to the following specific embodiments, which are by way of example only and are not intended to limit the invention.

### Examples

In the following examples, the bitumen employed was a Venezuelan bitumen having the following properties:
- penetration at 25°C (1/10 mm): 195
- ring and ball temperature (°C): 36.2,
- viscosity at 60°C (Pa.s) : 49
- viscosity at 100°C (Pa.s) : 1.78
- Ni content (ppm): 71
- V content (ppm): 547

The thermoplastic elastomer employed was
- Finaprene® 411 (tri-block styrene-butadiene SBS - a 30/70 wt.% styrene/butadiene polymer);
- Finaprene® 984 (tri-block styrene-butadiene SBS - a 45/55 wt.% styrene/butadiene polymer);
- Finaprene® 936 (tri-block styrene-butadiene SBS - a 36/64 wt.% styrene/butadiene polymer);

The two PPE tested were a low molecular weight PPE sold by General Electric under the name PPO857 and a high molecular weight PPE also sold by General Electric.

The measurements have been carried out according to the methods of the following standard tests:
Penetration: ASTM D-5-73, revised 95.
Ring and ball temperature: ASTM D-36.
Cold bending temperature: DIN 52123.
Viscosity: ASTM D-2170, revised 89.

### Example 1.

Bitumen was mixed respectively with the low molecular weight PPO alone and with a SBS/PPO blend. The SBS was Finaprene® 411. The bitumen was heated to 180 °C and the SBS was added in powder form simultaneously with the PPO in powder form. The amounts are given in weight percent based on the weight of the bituminous composition. After 30 minutes, the mixture was homogeneous. The amounts and properties are summarised in Table I.

**TABLE I.**

| | | | |
|---|---|---|---|
| Bitumen (%) | 100 | 90 | 85 |
| PPO (%) | - | 10 | 5 |
| SBS (%) | - | - | 10 |
| Penetration at 25°C (0.1mm) | 195 | 76 | 54 |
| Penetration at 60°C (0.1mm) | - | 302 | 155 |
| Ring & ball temp. (°C) | 37 | 45.9 | 141.6 |
| Viscosity at 180°C (Pa.s) | < 0.1 | 0.29 | 0.92 |
| Cold bending (°C) | - | - | -8 |

As can be seen from the results of Table I, the addition of PPO alone does not bring the required improvement in the ring and ball temperature.

### Example 2.

In this example the bitumen was mixed with various amounts of low molecular weight PPO and Finaprene® 411 as SBS using the same method as in Example 1. The amounts and results are summarised in Table II.

**TABLE II.**

| | | | | | | |
|---|---|---|---|---|---|---|
| SBS (%) | 12 | 12 | 12 | 10 | 10 | 10 |
| PPO (%) | 0.5 | 1 | 3 | 3 | 5 | 10 |
| Bitumen (%) | 87.5 | 87 | 85 | 87 | 85 | 80 |
| Penetration at 25°C (0.1 mm) | 51 | 49 | 45 | 56 | 47 | 76 |
| Penetration at 60°C (0.1mm) | 98 | 92 | 92 | 108 | 107 | 302 |
| Ring & ball (°C) | 135.1 | 140.4 | 158.1 | 151.6 | 159.2 | 45.9 |
| Viscosity at 160°C (Pa.s) | 1.94 | 2.3 | 2.87 | 2.09 | 2.5 | 0.29 |
| Viscosity at 180°C (Pa.s) | 1.28 | 1.73 | 2.09 | 0.96 | 1.24 | - |
| Cold bending (°C) | -36 | -34 | -20 | -22 | -20 | - |

### Comparative Example.

For comparison, the same bitumen and SBS as in example 2 have been mixed in various amounts without the addition of PPO. The amounts and results are summarised in Table III.

**TABLE III.**

| | | | |
|---|---|---|---|
| SBS(%) | 12 | 14 | 16 |
| Bitumen (%) | 88 | 86 | 84 |
| Penetration at 25°C (0.1mm) | 50 | 43 | 40 |
| Penetration at 60°C (0.1mm) | 98 | 89 | 78 |
| Ring & ball (°C) | 126.9 | 134.6 | 138.5 |
| Viscosity at 160°C (Pa.s) | 1.79 | 2.96 | 4.45 |
| Viscosity at 180°C (Pa.s) | 1.35 | 2.02 | 2.89 |
| Cold bending (°C) | -40 | -42 | -44 |

A comparison of Table II and Table III shows that the addition of even small amounts of PPO significantly increases the ring and ball temperature. For a given addition of SBS, it is observed that the ring and ball temperature increases with increasing amounts of PPO up to a certain amount of PPO. Further addition of PPO has an adverse effect on the properties of the bituminous composition. In addition, at comparable ring and ball temperature, the viscosity of the compositions according to the present invention is substantially lower than that of the prior art compositions.

### Example 3.

The bitumen was mixed with Finaprene® 411 as SBS and with various amounts of either a low molecular weight (LMW) PPO or a high molecular weight (HMW) PPO. The amounts and results are summarised in Table IV.

**TABLE IV.**

| | | | | | |
|---|---|---|---|---|---|
| LMW PPO (%) | - | 0.5 | 1 | - | - |
| HMW PPO (%) | - | - | - | 0.5 | 1 |
| SBS(%) | 12 | 12 | 12 | 12 | 12 |
| Bitumen (%) | 88 | 87.5 | 87 | 87.5 | 87 |
| Penetration at 25°C (0.1mm) | 50 | 51 | 49 | 53 | 50 |
| Penetration at 60°C (0 1mm) | 98 | 98 | 92 | 97 | 96 |
| Ring & ball (°C) | 126.9 | 135.1 | 140.4 | 130.3 | 132.1 |
| Viscosity at 160°C (Pa.s) | 1 79 | 1.94 | 2.3 | 2.03 | 2.4 |
| Viscosity at 180°C (Pa s) | 1.35 | 1.28 | 1.73 | 1 32 | 1.81 |
| Cold bending (°C) | -40 | -36 | -34 | -40 | -40 |

A comparison of the results obtained respectively with the low molecular weight PPO and the high molecular weight PPO shows that the addition of low molecular weight PPO to the bitumen composition results in a higher ring and ball temperature while maintaining a lower viscosity at equivalent ring and ball temperature.

### Example 4.

The bitumen was mixed with the low molecular weight PPO and with the three thermoplastic elastomers described in the previous section: Finaprene® 411, Finaprene® 936, and Finaprene® 984. The amounts and results are summarised in Table V.

**TABLE V.**

| | | | |
|---|---|---|---|
| Finaprene® 936 (%) | 12 13 12 | - - - | - - - |
| Finaprene® 411 (%) | - - - | 12 14 12 | - - - |
| Finaprene® 984 (%) | | | 12 14 12 |
| PPO(%) | - - 1 | - - 1 | - - 1 |
| Bitumen (%) | 88 87 87 | 88 86 87 | 88 86 87 |
| Penetration at 25 °C (0.1 mm) | 58 55 55 | 51 44 55 | 52 44 51 |
| Penetration at 50 °C (0.1 mm) | 119 113 120 | 100 90 94 | 96 82 97 |
| Ring & ball (°C) | 137 141 148 | 126 134 140 | 121 126 132 |
| Viscosity at 160 °C (Pa.s) | 1.8 2.1 2.5 | 2.0 3.5 2.4 | 1.6 1.6 1.6 |
| Cold bending (°C) | -34 -32 -36 | -38 -40 -32 | -38 -40 -36 |

A comparison of the results obtained with the different thermoplastic elastomers leads to the observation that the addition of 1 wt% of PPO with a SBS/PPO ratio of 12:1 leads in all cases to:
- an increase in the ring and ball temperature;
- a viscosity that does not increase substantially for a higher ring and ball temperature;
- substantially unchanged cold bending properties;
- low foot print sensitivity, except for the Finaprene® 936.

The best balance of properties is obtained with the SBS that has a styrene content of about 30 %.

## Claims

1. Process for preparing a bituminous composition comprising the steps of:
a) providing a bitumen content representing from 80 to 98 wt% based on the weight of the bituminous composition;
b) adding from 2 to 20 wt% of thermoplastic elastomer;
c) adding either simultaneously, or after, or before the thermoplastic elastomer of step b) from 0.2 to 10 wt% of polyphenylene ether (PPE) with a thermoplastic elastomer to PPE ratio ranging from 36:1 to 1:1

2. The process of claim 1 wherein the thermoplastic elastomer is a tri-block styrene-butadiene copolymer containing from 20 to 80 % of styrene.

3. The process of claim 2 wherein the thermoplastic copolymer is a tri-block styrene-butadiene copolymer comprising from 20 to 45 % of styrene.

4. The process of claim 3 wherein the thermoplastic copolymer is a tri-block styrene-butadiene copolymer comprising about 30 % of styrene.

5. The process of any one of the preceding claims wherein the polyphenylene ether is a low molecular weight polyphenylene ether.

6. The process of any one of the preceding claims wherein the ratio of thermoplastic elastomer to polephenylene ether is of from 24:1 to 4:1.

7. The process of any one of the preceding claims wherein the ratio of thermoplastic elastomer to polephenylene ether is about 12:1.

8. Bituminous composition obtainable by the process according to any one of claims 1 to 7 comprising from 80 to 98 wt% of bitumen, based on the weight of the bituminous composition, from 2 to 20 wt% of thermoplastic elastomer and from 0.2 to 10 wt% of polyphenylene ether (PPE) with a thermoplastic elastomer to PPE ratio ranging from 36:1 to 1:1

9. Use of polyphenylene ether to produce a bituminous composition having a good balance of mechanical properties.

10. Membranes prepared with the bituminous composition obtained by any one of claims 1 to 7.
